# EUROPEAN PATENT APPLICATION

(11) **EP 2 476 872 A2**
(43) Date of publication of application: **18.07.2012**
(21) Application number: 12150137.3
(22) Date of filing: 04.01.2012
(51) Int. Cl.: F01N 3/025, F01N 9/00, F01N 13/02, F01N 13/04, F01N 3/10

(54) **Exhaust gas purifying device and control method thereof**

(30) Priority: 12.01.2011 JP 2011003687
(71) Applicant: Kabushiki Kaisha Toyota Jidoshokki, Kariya-shi Aichi 448-8671 (JP); Toyota Jidosha Kabushiki Kaisha, Toyota-shi, Aichi 471-8571 (JP)
(72) Inventor: Murata, Dai, Kariya-shi, Aichi 448-8671 (JP); Takahashi, Yoshiyuki, Kariya-shi, Aichi 448-8671 (JP); Okamura, Masaaki, Kariya-shi, Aichi 448-8671 (JP); Yokoi, Tatsuhisa, Toyota-shi, Aichi 471-8571 (JP)
(74) Representative: TBK

(57) **Abstract**

In an exhaust gas purifying device 101 that includes DPFs 12a and 12b to perform PM regeneration simultaneously through supply of fuel upstream of the DPFs 12a and 12b, an ECU 50 sets a target bed temperature for the purpose of raising the temperature of the DPFs 12a and 12b during PM regeneration, and controls the fuel supplied upstream of the DPFs 12a and 12b in accordance with the set target bed temperature. The ECU 50 detects parameter values relating to the DPFs 12a and 12b, and compares the detected parameter values with a temperature rise condition for raising the target bed temperature. Upon determination that the parameter values in both the DPFs 12a and 12b satisfy the temperature rise condition, the ECU 50 resets a new target bed temperature by raising the target bed temperature set for the DPFs 12a and 12b.

## Description

### BACKGROUND OF THE INVENTION

### 1. Field of the Invention

The present invention relates to an exhaust gas purifying device, and a control method thereof, and more particularly, to an exhaust gas purifying device having a DPF (diesel particulate filter) regeneration function, and to a control method of the exhaust gas purifying device.

### 2. Description of the Related Art

DPFs are provided in the exhaust system of diesel engines in order to trap particulate matter (PM) that is contained in exhaust gas. As a result of such trapping, PM becomes deposited in the DPFs; however, regeneration is performed periodically in the DPFs, through elimination, by combustion, of the deposited PM, in order to prevent impairment of trapping performance due to the deposited PM.

For instance, Japanese Patent Application Laid Open No. 2009-528479, which is a publication of the Japanese Translation of the PCT Application thereof, discloses a particulate trap regeneration temperature control system for controlling regeneration by increasing an inlet temperature of a particulate trap (DPF) across a plurality of stages in order to prevent damage to the particulate trap due to an excessively high temperature of the particulate trap during regeneration of the latter. During regeneration of the particulate trap, specifically, the control system raises the inlet temperature, which is about 100°C upon start of regeneration, up to about 300°C, at a predetermined rate of about 10°C/second; thereafter raises the inlet temperature, which is about 300°C, up to a first predetermined temperature of about 575°C, at a predetermined rate of about 5°C/second; and holds thereafter the temperature of about 575°C for a predetermined time of about 205 seconds. After holding the inlet temperature at about 575°C, the control system raises the inlet temperature up to a second predetermined temperature of about 630°C, at a predetermined rate of about 0.2°C/second; thereafter holds the temperature of about 630°C for a predetermined time of about 75 seconds; thereafter raises the inlet temperature, which is about 630°C, up to a third predetermined temperature of about 650°C, at a predetermined rate of about 0.5°C/second; and holds the temperature of about 650°C for a predetermined time of about 110 seconds.

In the control system of Japanese Patent Application Laid Open No. 2009-528479, regeneration of the DPF is performed according to set temperature rise rates, and according to predetermined temperature hold times. In a case where this control scheme is used in, for instance, V type engines having a plurality of cylinder groups and a plurality of exhaust systems, and wherein respective DPFs are provided in the plurality of exhaust systems, temperature control during regeneration is performed individually for each DPF, regardless of the progress status of regeneration in other DPFs. This makes dissimilar states in the respective DPFs during regeneration and thus differences in engine back pressure between the exhaust systems, resulting in various problems. In an engine where a respective EGR passage is provided in each exhaust system, for instance, problems arise in that the EGR gas flow rate increases more in the exhaust system where back pressure rises to a greater degree, so that thermal degradation occurs only in one EGR passage.

### SUMMARY OF THE INVENTION

In order to solve the above problems, it is an object of the present invention to provide an exhaust gas purifying device, and a control method thereof, wherein there is little variability among respective exhaust systems even in a diesel engine having a plurality of exhaust systems.

In order to solve the above problems, the exhaust gas purifying device according to the present invention is an exhaust gas purifying device that is provided with a plurality of particulate matter trapping means for trapping particulate matter contained in exhaust gas, and that supplies fuel upstream of the particulate matter trapping means in order to regenerate the particulate matter trapping means, the exhaust gas purifying device comprising: target temperature setting means for setting a target temperature for the purpose of raising the temperature of the particulate matter trapping means during regeneration; fuel control means for controlling the fuel that is supplied upstream of the particulate matter trapping means in accordance with the target temperature set by the target temperature setting means; and information detection means for detecting information relating to the particulate matter trapping means, **characterized in that** the exhaust gas purifying device further comprises comparison means for comparing the information detected by the information detection means with a temperature rise condition for raising the target temperature, and in that the target temperature setting means performs re-setting of the target temperature by raising the target temperature that is set for all the particulate matter trapping means to be regenerated, when the comparison means determines that the information in all the particulate matter trapping means to be regenerated satisfies the temperature rise condition.

The method for controlling an exhaust gas purifying device according to the present invention is a method for controlling an exhaust gas purifying device in which a plurality of particulate matter trapping means for trapping particulate matter contained in exhaust gas is regenerated simultaneously in order to remove trapped particulate matter from the particulate matter trapping means, the method comprising: a target temperature setting step of setting a target temperature for the purpose of raising the temperature of the particulate matter trapping means during regeneration; a regeneration control step of controlling regeneration in the particulate matter trapping means so as to raise the temperature of the particulate matter trapping means to the target temperature set in the target temperature setting step; and an information detection step of detecting information relating to the particulate matter trapping means, **characterized in that** the method for controlling the exhaust gas purifying device further comprises a comparison step of comparing the information detected in the information detection step with a temperature rise condition for raising the target temperature, and in that, in the target temperature setting step, re-setting of the target temperature is performed by raising the target temperature that is set for all the particulate matter trapping means to be regenerated when it is determined, in the comparison step, that the information in all the particulate matter trapping means to be regenerated satisfies the temperature rise condition.

### BRIEF DESCRIPTION OF THE DRAWINGS

Fig. 1 is a schematic diagram illustrating an exhaust gas purifying device, and the peripheral configuration thereof, according to Embodiment 1 of the present invention;
Fig. 2 is a diagram illustrating part of a flowchart of the PM regeneration control in Embodiment 1;
Fig. 3 is a diagram illustrating part of a flowchart of the PM regeneration control in Embodiment 1;
Fig. 4 is a diagram illustrating the change over time of target bed temperature and various parameters during PM regeneration in Embodiment 1;
Fig. 5 is a diagram illustrating part of a flowchart of the PM regeneration control in Embodiment 2; and
Fig. 6 is a diagram illustrating the change over time of target bed temperature and various parameters during the PM regeneration in Embodiment 2.

### DETAILED DESCRIPTION OF THE PREFERRED EMBODIMENTS

Embodiments of the present invention are explained below on the basis of the accompanying drawings.

### First Embodiment

An explanation follows next on an exhaust gas purifying device 101, and a peripheral configuration thereof, according to Embodiment 1 of the present invention. In the embodiments below, examples will be explained on instances where the exhaust gas purifying device is used in a vehicle in which a diesel engine is installed.

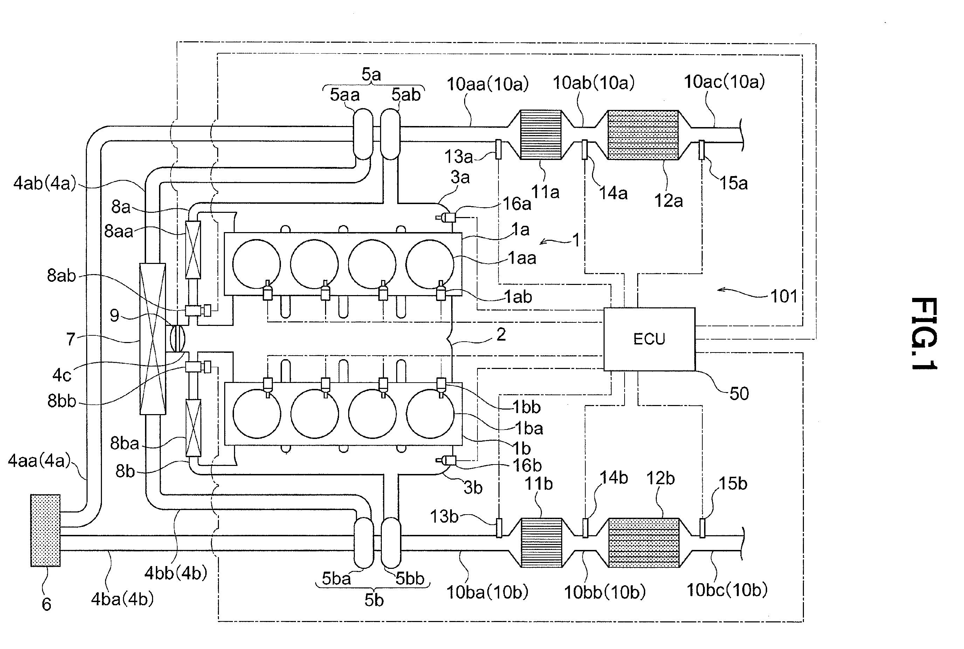

With reference to Fig. 1, an engine main body 1 of a diesel engine, having a so-called V-type engine structure, has two cylinder groups, namely a first cylinder group 1a and a second cylinder group 1b. The first cylinder group 1a and the second cylinder group 1b each comprise a plurality of cylinders 1aa and 1ba. Each cylinder 1aa and 1ba has a respective injector 1ab and 1bb for supplying fuel (diesel fuel) to the cylinders 1aa and 1ba. The injectors 1ab and 1bb are electrically connected to an ECU 50 which is a control device for controlling the vehicle. The injectors 1ab and 1bb are operated through control by the ECU 50. By way of fuel pipes, not shown, the injectors 1ab and 1bb communicate with a common-rail injection system, not shown, in which highpressure fuel is stored.

An intake manifold 2 for distributing intake air to each cylinder 1aa and 1ba is connected to each cylinder 1aa of the first cylinder group 1a and to each cylinder 1ba of the second cylinder group 1b. A first exhaust manifold 3a, for aggregating into one stream the exhaust gas that is discharged out of each cylinder 1aa of the first cylinder group 1a, is connected to each cylinder 1aa. A second exhaust manifold 3b is connected to each cylinder 1ba of the second cylinder group 1b.

The intake manifold 2 communicates, via a third intake passage 4c, with an intercooler 7 for cooling air that flows into the engine main body 1. A throttle valve 9 for regulating the amount of intake air that flows through the third intake passage 4c is provided halfway in the third intake passage 4c.

The intercooler 7 communicates with a compressor housing 5aa of a first turbocharger 5a by way of a second intake passage portion 4ab of a first intake passage 4a, and communicates with a compressor housing 5ba of a second turbocharger 5b by way of a second intake passage portion 4bb of a second intake passage 4b. Further, the compressor housing 5aa of the first turbocharger 5a and the compressor housing 5ba of the second turbocharger 5b communicate with an air cleaner 6, by way of a first intake passage portion 4aa of the first intake passage 4a and a first intake passage portion 4ba of the second intake passage 4b, respectively.

That is, the first intake passage 4a comprising the first intake passage portion 4aa and the second intake passage portion 4ab, forms a passage through which intake air is fed, via the first turbocharger 5a, and the second intake passage 4b comprising the first intake passage portion 4ba and the second intake passage portion 4bb forms a passage through which intake air is fed, via the second turbocharger 5b.

The first exhaust manifold 3a communicates with a turbine housing 5ab of the first turbocharger 5a, and the second exhaust manifold 3b communicates with a turbine housing 5bb of the second turbocharger 5b.

The first turbocharger 5a and the second turbocharger 5b have the same configuration. In an example of the first turbocharger 5a, this first turbocharger 5a has a structure wherein a compressor wheel, not shown, inside the compressor housing 5aa, and a turbine wheel, not shown, inside the turbine housing 5ab, are coupled to each other by way of a turbine shaft. In the first turbocharger 5a, exhaust gas supplied from the engine main body 1 by way of the first exhaust manifold 3a causes the turbine wheel to rotate, so that, as a result, the compressor wheel that rotates together with the turbine wheel pressurizes the intake air to supply the latter to the engine main body 1. The output of the engine main body 1 is enhanced as a result.

Halfway between the first exhaust manifold 3a and the second exhaust manifold 3b there are respectively provided a first EGR passage portion 8a and a second EGR passage portion 8b for recirculation of exhaust gas, from inside the first exhaust manifold 3a and the second exhaust manifold 3b, to downstream of the throttle valve 9 of the third intake passage 4c. Further, EGR coolers 8aa and 8ba for cooling recirculated gas, as well as a first EGR valve 8ab and a second EGR valve 8bb for adjusting the flow rate of recirculated gas, are provided along the first EGR passage portion 8a and the second EGR passage portion 8b, respectively. The first EGR valve 8ab and the second EGR valve 8bb are electrically connected to the ECU 50, such that the opening and closing operation of the valves is controlled by the ECU 50. Upon opening of the first EGR valve 8ab and the second EGR valve 8bb by the ECU 50, exhaust gas rich in inert components is recirculated into the third intake passage 4c, which is the intake system of the engine main body 1, and becomes mixed into the intake air. The combustion temperature in the engine main body 1 is lowered as a result, and the content of nitrogen oxide in the exhaust gas is reduced.

The turbine housing 5ab of the first turbocharger 5a communicates with a first exhaust passage 10a made up of a first exhaust passage portion 10aa, a second exhaust passage portion 10ab and a third exhaust passage portion 10ac. The first exhaust passage portion 10aa communicates the turbine housing 5ab of the first turbocharger 5a with a first oxidation catalyst 11a that is provided downstream of the turbine housing 5ab and that promotes an oxidation reaction (combustion) of fuel components in the exhaust gas. The second exhaust passage portion 10ab communicates the first oxidation catalyst 11a with a first diesel particulate filter (DPF) 12a for trapping particulate matter (PM) in the exhaust gas, which is provided downstream of the first oxidation catalyst 11a. The third exhaust passage portion 10ac communicates the first DPF 12a with the exterior of the vehicle by way of a muffler not shown.

The turbine housing 5bb of the second turbocharger 5b communicates with a second exhaust passage 10b having the same configuration as that of the first exhaust passage 10a of the first turbo charger 5a. The second exhaust passage 10b comprises a first exhaust passage portion 10ba, a second exhaust passage portion 10bb and a third exhaust passage portion 10bc. As in the first exhaust passage 10a, a second oxidation catalyst 11b and a second DPF 12b are provided along the second exhaust passage 10b. The first exhaust passage portion 10ba of the second exhaust passage 10b communicates the turbine housing 5bb of the second turbocharger 5b with the second oxidation catalyst 11b, the second exhaust passage portion 10bb communicates the second oxidation catalyst 11b with the second DPF 12b, and the third exhaust passage portion 10bc communicates the second DPF 12b with the exterior of the vehicle.

Herein, the first DPF 12a and the second DPF 12b constitute particulate matter trapping means.

In the first exhaust passage 10a, a first catalyst upstream temperature sensor 13a that measures the temperature of exhaust gas that flows through the first exhaust passage portion 10aa is provided in the vicinity of the upstream side of the first oxidation catalyst 11a in the first exhaust passage portion 10aa. A first DPF upstream temperature sensor 14a that measures the temperature of exhaust gas flowing through the second exhaust passage portion 10ab is provided in the second exhaust passage portion 10ab, and a first DPF downstream temperature sensor 15a that measures the temperature of exhaust gas flowing through the third exhaust passage portion 10ac is provided in the third exhaust passage portion 10ac of the first exhaust passage 10a, in the vicinity of the downstream side of the first DPF 12a. The first catalyst upstream temperature sensor 13a, the first DPF upstream temperature sensor 14a and the first DPF downstream temperature sensor 15a are electrically connected to the ECU 50, such that the respective measured temperatures are converted to electric signals that are sent to the ECU 50.

In the second exhaust passage 10b, a second catalyst upstream temperature sensor 13b that measures the temperature of exhaust gas flowing through the first exhaust passage portion 10ba is provided in the vicinity of the upstream side of the second oxidation catalyst 11b in the first exhaust passage portion 10ba, and a second DPF upstream temperature sensor 14b that measures the temperature of exhaust gas flowing through the second exhaust passage portion 10bb is provided in the second exhaust passage portion 10bb. A second DPF downstream temperature sensor 15b that measures the temperature of exhaust gas flowing through the third exhaust passage portion 10bc is provided in the vicinity of the downstream side of the second DPF 12b in the third exhaust passage portion 10bc of the second exhaust passage 10b. The second catalyst upstream temperature sensor 13b, the second DPF upstream temperature sensor 14b and the second DPF downstream temperature sensor 15b are electrically connected to the ECU 50, such that the respective measured temperatures are converted to electric signals that are sent to the ECU 50.

The first exhaust manifold 3a and the second exhaust manifold 3b are respectively provided with a first fuel injection valve 16a and a second fuel injection valve 16b that are capable of injecting fuel (diesel fuel) into the first exhaust manifold 3a and the second exhaust manifold 3b. The first fuel injection valve 16a and the second fuel injection valve 16b are connected to a fuel supply pump, not shown, such that fuel is injected as a result of valve opening, and injection is discontinued through valve closing. The fuel supply pump is a known pump that doubles as a pump for supplying fuel to a common rail, and supplies lower pressure fuel than a common rail side to the first fuel injection valve 16a and the second fuel injection valve 16b. The first fuel injection valve 16a and the second fuel injection valve 16b are electrically connected to the ECU 50, so that the ECU 50 controls the opening and closing operations of the valves. Fuel addition is performed through repeated opening and closing operations of the first fuel injection valve 16a and the second fuel injection valve 16b. Control of the fuel addition amount is accomplished through lengthening and shortening of the opening period.

The exhaust gas purifying device 101 comprises the first DPF 12a, the first oxidation catalyst 11a, the first fuel injection valve 16a, the first catalyst upstream temperature sensor 13a, the first DPF upstream temperature sensor 14a and first DPF downstream temperature sensor 15a, the second DPF 12b, the second oxidation catalyst 11b, the second fuel injection valve 16b, the second catalyst upstream temperature sensor 13b, the second DPF upstream temperature sensor 14b and second DPF downstream temperature sensor 15b, as well as the ECU 50.

An explanation follows next on the operation of the exhaust gas purifying device 101, and a peripheral configuration thereof, according to Embodiment 1 of the present invention.

With reference to Fig. 1, operation of the engine main body 1 causes external air to be taken, as intake air, into the compressor housing 5aa of the first turbo charger 5a, by way of the air cleaner 6 and the first intake passage portion 4aa of the first intake passage 4a. At the same time, intake air is taken into the compressor housing 5ba of the second turbocharger 5b by way of the air cleaner 6 and the first intake passage portion 4ba of the second intake passage 4b. The intake air streams are supercharged by respective compressor wheels, not shown, in the compressor housings 5aa and 5ba, and flow into the intercooler 7 by way of the second intake passage portion 4ab of the first intake passage 4a and the second intake passage portion 4bb of the second intake passage 4b. When passing through the intercooler 7, the inflowing intake air is cooled through heat exchange with the engine cooling water. Thereafter, the intake air flows into the intake manifold 2, by way of the third intake passage 4c, and is distributed, by the intake manifold 2, to each cylinder 1aa of the first cylinder group 1a and each cylinder 1ba in the second cylinder group 1b in the engine main body 1. Inside the cylinder 1aa, the intake air becomes mixed with fuel (diesel fuel) that is injected by the injector 1ab, and the resulting mixture burns on account of compressed self ignition. Inside the cylinder 1ba, intake air becomes mixed with the fuel injected by the injector 1bb, and the resulting mixture burns on account of compressed self ignition.

The intake air and fuel that have burned inside the cylinder 1aa are discharged, in the form of exhaust gas, to the first exhaust manifold 3a, and flow into the turbine housing 5ab of the first turbocharger 5a. The intake air and fuel that have burned inside the cylinder 1ba are discharged, in the form of exhaust gas, to the second exhaust manifold 3b, and flow from the second exhaust manifold 3b into the turbine housing 5bb of the second turbocharger 5b.

The exhaust gas flowing into the turbine housings 5ab and 5bb flow out to the first exhaust passage 10a and the second exhaust passage 10b, respectively, while increasing, in doing so, the rotation of the turbine wheels, not shown, and of the compressor wheels that are coupled to the turbine wheels.

The exhaust gas flowing out of the first exhaust passage 10a flows from the first exhaust passage portion 10aa of the first exhaust passage 10a into the third exhaust passage portion 10ac, via the first oxidation catalyst 11a, the second exhaust passage portion 10ab and the first DPF 12a, and is discharged out of the vehicle, from the third exhaust passage portion 10ac, via a muffler not shown. The PM contained in the exhaust gas is trapped by the first DPF 12a as the exhaust gas passes through the first DPF 12a.

Likewise, the exhaust gas discharged to the second exhaust passage 10b passes from the first exhaust passage portion 10ba of the second exhaust passage 10b through the second oxidation catalyst 11b, the second exhaust passage portion 10bb, the second DPF 12b and the third exhaust passage portion 10bc, and is discharged out of the vehicle via a muffler not shown. The PM contained in the exhaust gas is trapped by the second DPF 12b as the exhaust gas passes through the second DPF 12b.

Trapping of PM from the exhaust gas causes PM to become deposited continuously in the first DPF 12a and the second DPF 12b. However, the PM trapping performance is impaired when the deposition amount of PM becomes excessive. Therefore, PM regeneration is performed wherein deposited PM is burnt when the PM deposition amount reaches a regeneration start reference amount α which is a predetermined reference amount.

The ECU 50 estimates and calculates a PM generation amount in the first cylinder group 1a and the second cylinder group 1b on the basis of the operation state of the vehicle, for instance the operation state of the engine main body 1, engine load, engine revolutions, fuel injection amount and intake air amount. The ECU 50 estimates and calculates a PM oxidation amount on the basis of the intake air amount in the engine main body 1 and estimated bed temperatures, being estimated temperatures of the first DPF 12a and the second DPF 12b. The ECU 50 calculates a PM deposition amount (referred to as estimated PM deposition amount) at the first DPF 12a and the second DPF 12b by integrating, over the operation time of the engine main body 1, the differences between the PM generation amount and the PM oxidation amount. The estimated bed temperature of the first DPF 12a is estimated and calculated on the basis of temperature information sent by the first DPF upstream temperature sensor 14a and the first DPF downstream temperature sensor 15a. The estimated bed temperature of the second DPF 12b is estimated and calculated on the basis of temperature information sent by the second DPF upstream temperature sensor 14b and the second DPF downstream temperature sensor 15b.

The ECU 50 starts the PM regeneration of both the first DPF 12a and the second DPF 12b simultaneously when the estimated PM deposition amount of either the first DPF 12a or second DPF 12b reaches the regeneration start reference amount α. Upon completion of PM regeneration, accordingly, the ECU 50 repeatedly performs PM regeneration of the first DPF 12a and the second DPF 12b whenever the estimated PM deposition amount in either of the foregoing reaches the regeneration start reference amount α.

Upon PM regeneration start, the ECU 50 opens the first fuel injection valve 16a and the second fuel injection valve 16b during operation of the engine main body 1, and causes fuel (diesel fuel) to be injected into the first exhaust manifold 3a and the second exhaust manifold 3b, respectively. The fuel injected into the first exhaust manifold 3a and the second exhaust manifold 3b becomes mixed with exhaust gas that flows through the interior of the first exhaust manifold 3a and the second exhaust manifold 3b, and flows into the turbine housing 5ab of the first turbocharger 5a and the turbine housing 5bb of the second turbocharger 5b. The exhaust gas streams inside the turbine housings 5ab and the 5bb are mixed homogeneously with fuel upon rotation of the turbine wheels, not shown, then exit out to the first exhaust passage 10a and the second exhaust passage 10b, and flow into the first oxidation catalyst 11a and the second oxidation catalyst 11b.

In the first oxidation catalyst 11a and the second oxidation catalyst 11b, fuel burns through the action of the carried oxidation catalyst and through the action of the temperature of the exhaust gas. The burning fuel causes the temperature of the exhaust gas to rise to a high temperature. The high-temperature exhaust gas flows from the first oxidation catalyst 11a and the second oxidation catalyst 11b into the first DPF 12a and the second DPF 12b, respectively, to cause the deposited PM to burn.

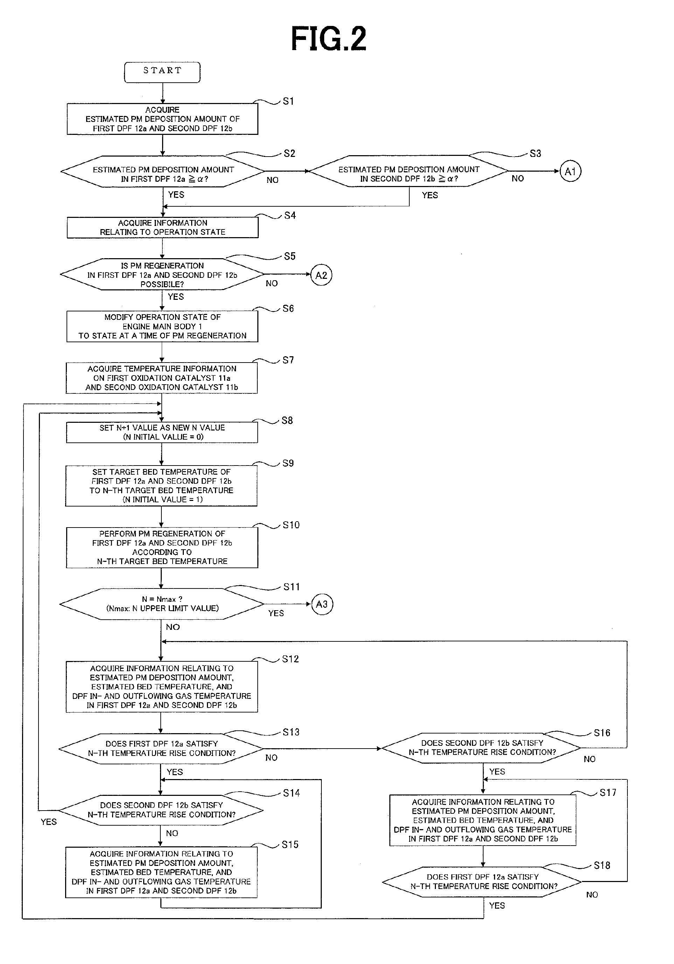

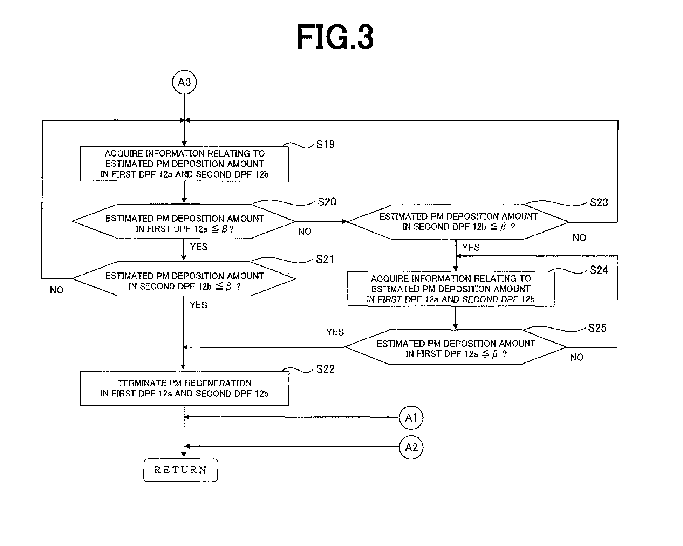

At this time, the ECU 50 controls PM regeneration in the first DPF 12a and the second DPF 12b according to the control illustrated in the flowcharts of Fig. 2 and Fig. 3. The ECU 50 controls PM regeneration so as to raise the bed temperatures of the first DPF 12a and the second DPF 12b in accordance with a target temperature of bed temperature (referred to as target bed temperature) of the first DPF 12a and the second DPF 12b, while raising stage-wise the target bed temperature, in order to prevent problems such as thermal degradation, erosion and the like, in the first DPF 12a and the second DPF 12b, caused by an excessive temperature rise accompanying the progress of abrupt PM combustion.

With reference to Fig. 2, in step S1, the ECU 50 acquires a value of an estimated PM deposition amount (referred to as estimated PM deposition amount da) in the first DPF 12a and an estimated PM deposition amount (referred to as estimated PM deposition amount db) in the second DPF 12b that are calculated before start of PM regeneration, and then the ECU 50 proceeds to step S2.

In step S2, the ECU 50 determines whether the estimated PM deposition amount da of the first DPF 12a is equal to or greater than the regeneration start reference amount α. If the estimated PM deposition amount da is equal to or greater than the regeneration start reference amount α (estimated PM deposition amount da ≥ α), the ECU 50 determines that PM regeneration is required in the first DPF 12a and the second DPF 12b, and the ECU 50 proceeds to step S4. If, on the other hand, the estimated PM deposition amount da is smaller than the regeneration start reference amount α (estimated PM deposition amount da < α), the ECU 50 proceeds to step S3.

In step S3, the ECU 50 determines whether the estimated PM deposition amount db of the second DPF 12b is equal to or greater than the regeneration start reference amount α. If the estimated PM deposition amount db is equal to or greater than the regeneration start reference amount α (estimated PM deposition amount db ≥ α), the ECU 50 determines that PM regeneration is required in the first DPF 12a and the second DPF 12b, and the ECU 50 proceeds to step S4. If the estimated PM deposition amount db is smaller than the regeneration start reference amount α (estimated PM deposition amount db < α), the ECU 50 determines that PM regeneration is unnecessary in the first DPF 12a and the second DPF 12b, and the control-related routine is terminated as illustrated in Fig. 3.

In step S4, the ECU 50 acquires information relating to the operation state of the vehicle such as the operation state of the engine main body 1 (Fig. 1), engine load, engine revolutions, fuel injection amount and intake air amount, etc., and information relating to the exhaust gas purifying device 101 such as temperature information on the first oxidation catalyst 11a and the second oxidation catalyst 11b (Fig. 1), etc., and the ECU 50 proceeds to step S5.

In step S5, the ECU 50 determines whether the information acquired in step S4 enables execution of PM regeneration in the first DPF 12a and the second DPF 12b. For instance, a state of significant fluctuations of engine load in the engine main body 1 (Fig. 1), or a state where fuel is cut upon deceleration in the engine main body 1, etc., are unsuitable states for PM regeneration. Also, instances of extremely low temperature of the first oxidation catalyst 11a and the second oxidation catalyst 11b (Fig. 1) are likewise unsuitable for PM regeneration. When the ECU 50 determines that PM regeneration can be performed in the first DPF 12a and the second DPF 12b, the ECU 50 proceeds to step S6, and when the ECU 50 determines otherwise, the control-related routine is terminated as illustrated in Fig. 3.

In step S6, the ECU 50 switches the operation state of the engine main body 1 to an operation state that conforms to PM regeneration, and the ECU 50 proceeds to step S7. In this case, the ECU 50 switches to an operation state such that the temperature of the exhaust gas is raised. In a case where, for instance, the first EGR valve 8ab and the second EGR valve 8bb are opened and the exhaust gas is recirculated, the ECU 50 controls the degree of opening of the first EGR valve 8ab and the second EGR valve 8bb, to reduce the exhaust gas recirculation rate. Alternatively, the first EGR valve 8ab and the second EGR valve 8bb are closed. The ECU 50 modifies the timing of injection of fuel to the cylinders 1aa and 1ba from the injectors 1ab and 1bb, respectively, in the combustion stroke in the engine main body 1, to raise thereby the temperature of the exhaust gas that is discharged out of the cylinders 1aa and 1ba. By way of the throttle valve 9, the ECU 50 reduces the flow rate of intake air to within a range that is not detrimental to combustion, and reduces as a result the heat capacity of the entire gas, to raise thereby the temperature of the exhaust gas (see Fig. 1).

In step S7, the ECU 50 acquires temperature information on the first oxidation catalyst 11a and the second oxidation catalyst 11b (Fig. 1). Specifically, the ECU 50 estimates and calculates a bed temperature of the first oxidation catalyst 11a on the basis of temperature information sent by the first catalyst upstream temperature sensor 13a and the first DPF upstream temperature sensor 14a (Fig. 1), and estimates and calculates the bed temperature of the second oxidation catalyst 11b on the basis of temperature information sent by the second catalyst upstream temperature sensor 13b and the second DPF upstream temperature sensor 14b. The ECU 50 proceeds then to step S8.

Regarding step S8, the ECU 50 raises the bed temperatures of the first DPF 12a and the second DPF 12b in accordance with a target temperature of bed temperature (referred to as target bed temperature) of the first DPF 12a and the second DPF 12b during PM regeneration, while raising stage-wise the target bed temperature. In step S8, however, the ECU 50 sets which stage the target bed temperature thereof is the target bed temperature to be set. For a stage N (initial value of N is 0) of a target bed temperature already set, specifically, the ECU 50 sets a value of N+1, resulting from raising by one stage the stage of the target bed temperature, as the new value of the stage N of the target bed temperature. The ECU 50 proceeds to step S9 in order to set the target bed temperature of PM regeneration in the new stage N.

In step S8 arrived at from step S7 in which PM regeneration is not yet carried out, the stage of already-set target bed temperature is 0 (N = 0); the ECU 50 sets a new stage N to 1, and proceeds to step S9.

In step S9, the ECU 50 sets an N-th target bed temperature TN as the target bed temperature of an N-th stage, for both the first DPF 12a and the second DPF 12b during PM regeneration, and the ECU 50 proceeds to step S10.

The ECU 50 sets a first target bed temperature T1 for both the first DPF 12a and the second DPF 12b in a first stage (N = 1).

Herein, the ECU 50 sets the first target bed temperature T1 on the basis of the bed temperatures of the first oxidation catalyst 11a and the second oxidation catalyst 11b (Fig. 1) as estimated and calculated in step S7. The first target bed temperature T1 may be a temperature resulting from adding a predetermined temperature to each bed temperature of the first oxidation catalyst 11a and the second oxidation catalyst 11b, and may be dissimilar between the first DPF 12a and the second DPF 12b. Alternatively, the first target bed temperature T1 may be a temperature at which the carried oxidation catalyst becomes sufficiently activated. A first target bed temperature T1 such as the above-described one can be set for instance to a temperature around 300°C.

The oxidation reaction progresses abruptly, through the action of the first oxidation catalyst 11a and the second oxidation catalyst 11b, upon addition of a large amount of fuel, over a short time, from the first fuel injection valve 16a and the second fuel injection valve 16b (Fig. 1), in an attempt to raise significantly the bed temperatures of the first DPF 12a and the second DPF 12b. The temperature of the exhaust gas rises significantly and abruptly as a result. In turn, this causes abrupt PM combustion in the first DPF 12a and the second DPF 12b, which translates into an excessive rise in the bed temperatures of the first DPF 12a and the second DPF 12b. The first DPF 12a and second DPF 12b are damaged thereby. Accordingly, the first target bed temperature T1 is set to a comparatively low temperature, such as the above-described one, that makes it possible to prevent PM combustion from progressing abruptly.

Herein, the ECU 50 constitutes target temperature setting means.

In step S10, the ECU 50 performs simultaneously PM regeneration in the first DPF 12a and the second DPF 12b, in accordance with the N-th target bed temperature TN, i.e. so as to raise the bed temperatures of the first DPF 12a and the second DPF 12b up to an N-th target bed temperature TN, and the ECU 50 proceeds to step S11.

In the PM regeneration of the first stage (N = 1) where the target bed temperature is set to the first target bed temperature T1, the ECU 50 PM simultaneously starts regeneration in the first DPF 12a and the second DPF 12b so as to raise the bed temperatures of the first DPF 12a and the second DPF 12b up to the first target bed temperature T1.

Herein, the ECU 50 estimates and calculates the bed temperature of the first DPF 12a (referred to as estimated bed temperature Tfa) on the basis of temperature information sent by the first DPF upstream temperature sensor 14a and the first DPF downstream temperature sensor 15a (Fig. 1), and estimates and calculates the bed temperature (referred to as estimated bed temperature Tfb) of the second DPF 12b on the basis of temperature information sent by the second DPF upstream temperature sensor 14b and the second DPF downstream temperature sensor 15b (Fig. 1).

In accordance with the fuel addition amount required for raising the estimated bed temperature Tfa in the first DPF 12a to the first target bed temperature T1, the ECU 50 controls the opening and closing of the first fuel injection valve 16a (Fig. 1), to add fuel upstream of the first oxidation catalyst 11a (Fig. 1). Similarly, in accordance with the fuel addition amount required for raising the estimated bed temperature Tfb in the second DPF 12b to the first target bed temperature T1, the ECU 50 performs opening and closing control of the second fuel injection valve 16b (Fig. 1), to add fuel upstream of the second oxidation catalyst 11b (Fig. 1). As a result, the temperature of the exhaust gas is raised through an oxidation reaction (combustion) of the added fuel in the first oxidation catalyst 11a and the second oxidation catalyst 11b, and the raised temperature exhaust gas causes the bed temperatures of the first DPF 12a and the second DPF 12b to rise. The ECU 50 adjusts as needed the opening periods of the first fuel injection valve 16a and the second fuel injection valve 16b in such a manner that the estimated bed temperatures of the first DPF 12a and the second DPF 12b, which fluctuate during PM regeneration, are raised to the first target bed temperature T1.

Herein, the ECU 50 constitutes fuel control means.

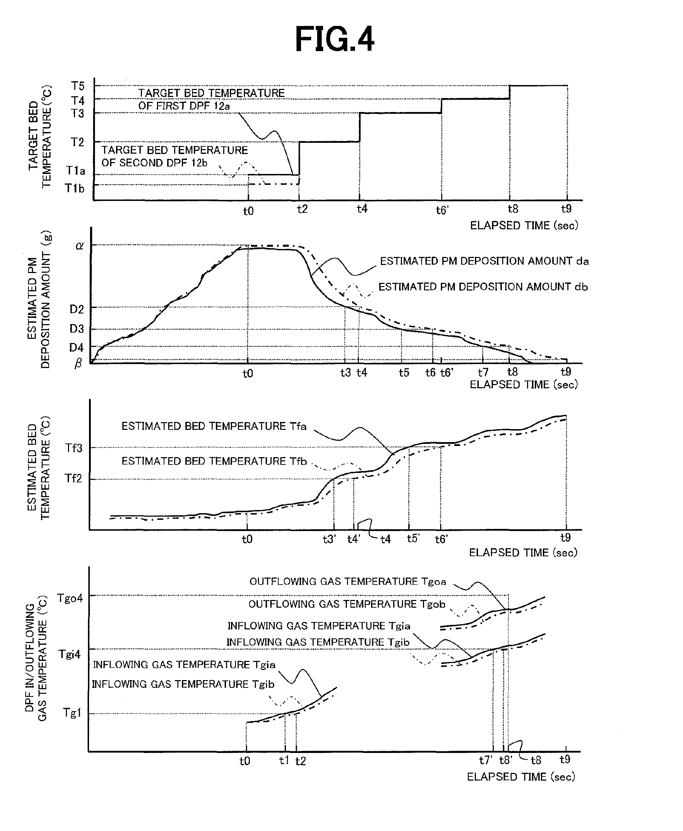

With reference to Fig. 4, the graphs illustrate the change over time of target bed temperature (units: °C), estimated PM deposition amount (units: g), estimated bed temperature (units: °C), and temperature of the gas flowing into and out of the DPFs (units: °C), relating to the first DPF 12a and the second DPF 12b, with regard to partial or complete times from before PM regeneration, during PM regeneration and up to completion of PM regeneration. The temperature of the gas flowing into the DPFs is the temperature of exhaust gas as measured by the first DPF upstream temperature sensor 14a and the second DPF upstream temperature sensor 14b (Fig. 1). The temperature of gas flowing out of the DPFs is the temperature of exhaust gas as measured by the first DPF downstream temperature sensor 15a and the second DPF downstream temperature sensor 15b (Fig. 1). In the graphs, the ordinate axis represents target bed temperature, estimated PM deposition amount, estimated bed temperature and DPF inflow-outflow gas temperature, and the abscissa axis represents elapsed time. PM regeneration starts in the first DPF 12a and second DPF 12b at time to.

As illustrated in Fig. 4, PM regeneration starts at time t0, and thereafter, heating is performed in the first DPF 12a and the second DPF 12b at first target bed temperatures T1a and T1b around 300°C as target bed temperatures. Although the bed temperatures of the first DPF 12a and the second DPF 12b are raised as a result, the deposited PM thereof does not burn at this raised temperature, and there is virtually no change in the estimated PM deposition amount. The first target bed temperatures T1a and T1b that are used in Fig. 4 are temperatures resulting from adding a predetermined temperature to the estimated bed temperatures of the first oxidation catalyst 11a and the second oxidation catalyst 11b (Fig. 1), respectively.

Returning to Fig. 2, in step S11 the ECU 50 checks the stage N of the target bed temperature in the PM regeneration in progress. The ECU 50 has stored therein the number of stages of target bed temperature during PM regeneration. In the present Embodiment 1, the number of stages is set to 5. The ECU 50 checks whether the stage N of target bed temperature in the PM regeneration in progress is a maximum value Nmax (in the present Embodiment 1, Nmax = 5) of the stage number. If the stage N is not the maximum value Nmax (Nmax = 5), i.e. if the stage N is smaller than the maximum value Nmax, the ECU 50 proceeds to step S12. If the stage N is the maximum value Nmax (Nmax = 5), the ECU 50 proceeds to step S19, as illustrated in Fig. 3. In PM regeneration where the first target bed temperature T1 is set as target bed temperature, since the stage N is 1 (N = 1), the ECU 50 proceeds to step S12.

In step S12, the ECU 50 acquires values of parameters relating to the first DPF 12a and the second DPF 12b during PM regeneration, and proceeds to step S13. Parameters relating to the first DPF 12a are the estimated PM deposition amount da, the estimated bed temperature Tfa, the temperature of exhaust gas flowing into the first DPF 12a (referred to as inflowing gas temperature Tgia) and the temperature of exhaust gas flowing out of the first DPF 12a (referred to as outflowing gas temperature Tgoa). Parameters relating to the second DPF 12b are the estimated PM deposition amount db, the estimated bed temperature Tfb, the temperature of exhaust gas flowing into the second DPF 12b (referred to as inflowing gas temperature Tgib) and the temperature of exhaust gas flowing out of the second DPF 12b (referred to as outflowing gas temperature Tgob).

Herein, the ECU 50 constitutes information detection means.

In step S13, the ECU 50 checks whether values of the parameters relating to the first DPF 12a satisfy an N-th temperature rise condition that is set for the stage N of target bed temperature. If the N-th temperature rise condition is satisfied, the ECU 50 proceeds to step S14; if the N-th temperature rise condition is not satisfied, the ECU 50 proceeds to step S16.

The N-th temperature rise condition is a condition for PM regeneration in which the N-th target bed temperature is set as the target bed temperature, and is a condition for the estimated PM deposition amount, the estimated bed temperature, the inflowing gas temperature and the outflowing gas temperature, in the first DPF 12a and the second DPF 12b.

In temperature rise control where the low-temperature first target bed temperature T1 is set as the target bed temperature, no PM combustion takes place in the first DPF 12a and the second DPF 12b, and the differences between the bed temperatures of the first DPF 12a and the second DPF 12b and the respective inflowing gas temperatures are small. Whether or not the first oxidation catalyst 11a and the second oxidation catalyst 11b (Fig. 1) have reached the activation temperature can be checked on the basis of the inflowing gas temperature. The first temperature rise condition at the first target bed temperature T1 is a condition of an inflowing gas temperature that allows obtaining detection results, in real time, faster than in the case of an estimated bed temperature that requires calculation time. The first temperature rise condition prescribes that the inflowing gas temperature is equal to or higher than the first target gas temperature Tg1. The first target gas temperature Tg1 may be the inflowing gas temperature in an instance where the bed temperature of the first DPF 12a or the second DPF 12b becomes the first target bed temperature T1.

In temperature rise control where the first target bed temperature T1 is taken as the target bed temperature, the ECU 50 checks whether the values of parameters relating to the first DPF 12a satisfy the first temperature rise condition, i.e. checks whether the temperature Tgia of gas flowing into the first DPF 12a is equal to or higher than the first target gas temperature Tg1. If the inflowing gas temperature Tgia is equal to or higher than the first target gas temperature Tg1, the ECU 50 proceeds to step S14. Otherwise, the ECU 50 proceeds to step S16.

In step S14, the ECU 50 checks whether the values of parameters relating to the second DPF 12b satisfy the N-th temperature rise condition. If the N-th temperature rise condition is satisfied, the ECU 50 proceeds to step S8, and if the N-th temperature rise condition is not satisfied, the ECU 50 proceeds to step S15 in order to check again the parameters relating to the first DPF 12a and the second DPF 12b that fluctuate with time.

In temperature rise control at the first target bed temperature T1, the ECU 50 checks whether values of parameters relating to the second DPF 12b satisfy the first temperature rise condition, i.e. whether the temperature Tgib of gas flowing into to the second DPF 12b is equal to or higher than the first target gas temperature Tg1. If the inflowing gas temperature Tgib is equal to or higher than the first target gas temperature Tg1, the ECU 50 proceeds to step S8. Otherwise, the ECU 50 proceeds to step S15.

Herein, the ECU 50 constitutes comparison means.

In step S15, the ECU 50 acquires again values of parameters relating to the first DPF 12a and the second DPF 12b, and returns to step S14.

In step S16 arrived at from step S13, the ECU 50 checks whether the values of parameters relating to the second DPF 12b satisfy the N-th temperature rise condition. If the N-th temperature rise condition is satisfied, the ECU 50 proceeds to step S17; if the N-th temperature rise condition is not satisfied, the ECU 50 returns to step S12.

In temperature rise control where the first target bed temperature T1 is taken as the target bed temperature, the ECU 50 checks whether the temperature Tgib of gas flowing into the second DPF 12b is equal to or higher than the first target gas temperature Tg1. If the inflowing gas temperature Tgib is equal to or higher than the first target gas temperature Tg1, the ECU 50 proceeds to step S17, Otherwise, the ECU 50 returns to step S12.

In step S17, the ECU 50 acquires again values of parameters relating to the first DPF 12a and the second DPF 12b, and proceeds to step S18; the ECU 50 checks whether the values of parameters relating to the first DPF 12a satisfy the N-th temperature rise condition. If the N-th temperature rise condition is satisfied, the ECU 50 proceeds to step S8; if the N-th temperature rise condition is not satisfied, the ECU 50 returns to step S17.

In temperature rise control where the first target bed temperature T1 is taken as the target bed temperature, the ECU 50 checks, in step S18, whether the temperature Tgia of gas flowing into the first DPF 12a is equal to or higher than the first target gas temperature Tg1. If the inflowing gas temperature Tgia is equal to or higher than the first target gas temperature Tg1, the ECU 50 proceeds to step S8. Otherwise, the ECU 50 returns to step S17.

As a result, the ECU 50 proceeds to step S8 if in step S12 to step S18 the ECU 50 could check that the values of parameters relating to the first DPF 12a and the values of parameters relating to the second DPF 12b satisfied in both instances the N-th temperature rise condition.

With reference to Fig. 4, in temperature rise control taking the first target bed temperature T1 as the target bed temperature, the temperature Tgia of gas flowing into the first DPF 12a becomes equal to or higher than the first target gas temperature Tg1 from time t1 onwards, while the temperature Tgib of gas flowing into the second DPF 12b becomes equal to or higher than the first target gas temperature Tg1 from time t2 onwards, wherein time t2 is a later time than time t1. Herein, the ECU 50 executes the process from step S14 up to step S8 in Fig. 2, at time t2, which is the later time from among times t1, t2, and raises the stage of target bed temperature to the second stage (N = 2), for the first DPF 12a and the second DPF 12b, after which the ECU 50 sets the target bed temperature to the second target bed temperature T2.

An explanation follows next on control of PM regeneration at a second stage resulting from rising, by one stage, the first stage at which the first target bed temperature T1 was the target bed temperature, and on control of PM regeneration at a third stage, fourth stage and fifth stage that are stages sequentially arrived at through raising from the second stage.

Returning to Fig. 2, in step S8 arrived at from step S14, the ECU 50 sets a value of 2, resulting from raising by one the stage (N = 1) of the target bed temperature, as value N of the stage of the new target bed temperature, for the first DPF 12a and the second DPF 12b satisfying the first temperature rise condition. The ECU 50 proceeds then to step S9 in order to set the target bed temperature at the second stage (N = 2).

In PM regeneration at the target bed temperature of the second stage, the ECU 50 executes the operation of step S9 to step S18 in the same way as described above.

In step S9, the ECU 50 sets the second target bed temperature T2 of the second stage for both the first DPF 12a and the second DPF 12b, and proceeds to step S10. At this time, the ECU 50 sets the second target bed temperature T2 to a temperature of, for instance, about 530°C, such that the bed temperatures of the first DPF 12a and the second DPF 12b can be prevented from rising excessively in an abrupt manner on account of PM combustion while PM combustion takes place.

In step S10, the ECU 50 extends the opening period of the first fuel injection valve 16a and the second fuel injection valve 16b (Fig. 1) in such a manner that the estimated bed temperature Tfa in the first DPF 12a and the estimated bed temperature Tfb of the second DPF 12b are raised up to the second target bed temperature T2, to increase the fuel addition amount.

Herein, the stage N is 2, which is smaller than the maximum value Nmax (Nmax = 5). Therefore, the ECU 50 proceeds from step S10 to step S12 via step S11. In step S12, the ECU 50 acquires values of parameters relating to the first DPF 12a and second DPF 12b, and in step S13 to step S18, checks whether the values of parameter of both the first DPF 12a and the second DPF 12b satisfy a second temperature rise condition. The ECU 50 proceeds to step S8 when it can be checked, for the first DPF 12a and the second DPF 12b, that all the values of parameters that are compared with the second temperature rise condition satisfy the second temperature rise condition.

The second temperature rise condition is a condition of a DPF state in which the progress status of PM regeneration in the DPFs as well as the temperature state in the DPFs are checked. The condition relates to estimated PM deposition amounts and estimated bed temperature of the DPFs, from among the parameters. Namely, the above condition prescribes that the estimated PM deposition amounts in the DPFs are equal to or smaller than a second target estimated PM deposition amount D2 and the estimated bed temperatures of the DPFs are equal to or higher than a second target estimated bed temperature Tf2. For instance, the second target estimated PM deposition amount D2 and the second target estimated bed temperature Tf2 may be set to, among others, a neighborhood value that is greater than the estimated PM deposition amount and a neighborhood value that is lower than the estimated bed temperature, as predicted in an instance where PM regeneration is performed at the second target bed temperature T2.

With reference to Fig. 4, in PM regeneration where the second target bed temperature T2 is set to the target bed temperature, the estimated PM deposition amount da in the first DPF 12a becomes equal to or smaller than the second target estimated PM deposition amount D2 from time t3 onwards, while the estimated PM deposition amount db in the second DPF 12b becomes equal to or smaller than the second target estimated PM deposition amount D2 from time t4 onwards, where time t4 is a time later than time t3. The estimated bed temperature Tfa in the first DPF 12a becomes equal to or higher than the second target estimated bed temperature Tf2 from time t3' onwards, wherein t3' is an earlier time than time t3, and the estimated bed temperature Tfb of the second DPF 12b becomes equal to or higher than the second target estimated bed temperature Tf2 from time t4' onwards, wherein time t4' is a time later than time t3 but earlier than time t4. In this case, the ECU 50 executes the process from step S14 up to step S8 in Fig. 2, at time t4, which is latest from among times t3, t3', t4 and t4', and raises the stage of target bed temperature to the third stage (N = 3), for the first DPF 12a and the second DPF 12b, after which the ECU 50 sets the target bed temperature to the third target bed temperature T3.

Returning to Fig. 2, in step S8 arrived at from step S14, the ECU 50 sets the stage N of the target bed temperature to 3, for the first DPF 12a and the second DPF 12b that satisfy the second temperature rise condition, and proceeds to step S9. In PM regeneration at the target bed temperature of the third stage, the ECU 50 executes the operation of step S9 to step S18 in the same way as in the above-described second stage.

In step S9, the ECU 50 sets the third target bed temperature T3 of the third stage for both the first DPF 12a and the second DPF 12b, and proceeds to step S10. The ECU 50 sets the third target bed temperature T3 to a temperature such that the bed temperatures of the first DPF 12a and the second DPF 12b can be prevented from rising excessively in an abrupt manner, for instance, to a temperature of about 600°C having been raised by several tens of degrees from the second target bed temperature T2.

In step S10, the ECU 50 controls the first fuel injection valve 16a and the second fuel injection valve 16b (Fig. 1) in such a manner that the estimated bed temperature Tfa in the first DPF 12a and the estimated bed temperature Tfb of the second DPF 12b are raised up to the third target bed temperature T3, to increase the fuel addition amount.

Herein, the stage N is 3, which is smaller than the maximum value Nmax (Nmax = 5). Therefore, the ECU 50 proceeds from step S10 to step S12 via step S11. In step S12, the ECU 50 acquires values of parameters relating to the first DPF 12a and second DPF 12b, and in step S13 to step S18, checks whether the values of parameter of both the first DPF 12a and the second DPF 12b satisfy a third temperature rise condition. The ECU 50 proceeds to step S8 when it can be checked, for the first DPF 12a and the second DPF 12b, that all the values of parameters that are compared with the third temperature rise condition satisfy the third temperature rise condition.

The third temperature rise condition is a condition for parameters, as in the second temperature rise condition, in which the progress status of PM regeneration in the DPFs as well as the temperature state in the DPFs are checked, namely a condition wherein the estimated PM deposition amounts in the DPFs are equal to or smaller than a third target estimated PM deposition amount D3 that is smaller than the second target estimated PM deposition amount D2, and the estimated bed temperatures of the DPFs are equal to or higher than a third target estimated bed temperature Tf3 that is higher than the second target estimated bed temperature Tf2. For instance, the third target estimated PM deposition amount D3 and the third target estimated bed temperature Tf3 may be set to, for example, a neighborhood value that is greater than the estimated PM deposition amount and a neighborhood value that is lower than the estimated bed temperature, as predicted in an instance where PM regeneration is performed at the third target bed temperature T3.

With reference to Fig. 4, in PM regeneration taking the third target bed temperature T3 as the target bed temperature, the estimated PM deposition amount da of the first DPF 12a becomes equal to or smaller than the third target estimated PM deposition amount D3 from time t5 onwards, while the estimated PM deposition amount db in the second DPF 12b becomes equal to or smaller than the third target estimated PM deposition amount D3 from time t6 onwards, where time t6 is a time later than time t5. The estimated bed temperature Tfa in the first DPF 12a becomes equal to or higher than the third target estimated bed temperature Tf3 from time t5' onwards, wherein the time t5' is a later time than time t5, and the estimated bed temperature Tfb of the second DPF 12b becomes equal to or higher than the third target estimated bed temperature Tf3 from time t6' onwards, wherein time t6' is a later time than times t5' and t6. The ECU 50 executes the process from step S14 up to step S8 in Fig. 2, at time t6', which is latest from among times t5, t5', t6 and t6', and raises the stage of target bed temperature to the fourth stage (N = 4), for the first DPF 12a and the second DPF 12b, after which the ECU 50 sets the target bed temperature to the fourth target bed temperature T4.

Returning to Fig. 2, in step S8 arrived at from step S14, the ECU 50 sets the stage N of the target bed temperature to 4, for the first DPF 12a and the second DPF 12b that satisfy the third temperature rise condition, and proceeds to step S9. In PM regeneration at the target bed temperature of the fourth stage, the ECU 50 executes the operations in step S9 to step S18, in the same way as in the above-described second stage and third stage.

In step S9, the ECU 50 sets the fourth target bed temperature T4 of the fourth stage for both the first DPF 12a and the second DPF 12b, and proceeds to step S10. The ECU 50 sets the fourth target bed temperature T4 to a temperature such that the bed temperature of the first DPF 12a and the second DPF 12b can be prevented from rising excessively in an abrupt manner, for instance, to a temperature of about 630°C having been raised by several tens of degrees from the third target bed temperature T3.

In step S10, the ECU 50 controls the first fuel injection valve 16a and the second fuel injection valve 16b (Fig. 1) in such a manner that the estimated bed temperature Tfa in the first DPF 12a and the estimated bed temperature Tfb of the second DPF 12b are raised up to the fourth target bed temperature T4, to increase the fuel addition amount.

Herein, the stage N is 4, which is smaller than the maximum value Nmax (Nmax = 5). Therefore, the ECU 50 proceeds from step S10 to step S12 via step S11. In step S12, the ECU 50 acquires values of parameters relating to the first DPF 12a and second DPF 12b, and in step S13 to step S18, checks whether the values of parameters of both the first DPF 12a and the second DPF 12b satisfy a fourth temperature rise condition. The ECU 50 proceeds to step S8 when it can be checked, for the first DPF 12a and the second DPF 12b, that all the values of parameters that are compared with the fourth temperature rise condition satisfy the fourth temperature rise condition.

The fourth temperature rise condition in which the fourth target bed temperature T4 is a high temperature comprises a condition of checking the progress status of PM regeneration in the DPFs, and a condition of checking a real-time temperature state relating to the DPFs in order to prevent the bed temperatures of the DPFs from rising excessively; i.e. the fourth temperature rise condition applies to the estimated PM deposition amount in the DPFs as well as the inflow-outflow gas temperatures, from among the parameters. That is, the fourth temperature rise condition prescribes that the estimated PM deposition amounts in the DPFs are equal to or smaller than a fourth target estimated PM deposition amount D4 that is smaller than the third target estimated PM deposition amount D3, and the temperatures of gas flowing into the DPFs are equal to or higher than a fourth target inflowing gas temperature Tgi4, and the temperatures of gas flowing out of the DPFs are equal to or lower than a fourth target outflowing gas temperature Tgo4. For instance, the fourth target estimated PM deposition amount D4, the fourth target inflowing gas temperature Tgi4 and the fourth target outflowing gas temperature Tgo4 may be set on the basis of, for example, an estimated PM deposition amount, a target inflowing gas temperature and an allowable outflowing gas temperature as predicted in an instance where PM regeneration is performed at the fourth target bed temperature T4.

With reference to Fig. 4, in PM regeneration where the fourth target bed temperature T4 is set to the target bed temperature, the estimated PM deposition amount da in the first DPF 12a becomes equal to or smaller than the fourth target estimated PM deposition amount D4 from time t7 onwards, while the estimated PM deposition amount db in the second DPF 12b becomes equal to or smaller than the fourth target estimated PM deposition amount D4 from time t8 onwards, where time t8 is a time later than time t7. The inflowing gas temperature Tgia in the first DPF 12a becomes equal to or higher than the fourth target inflowing gas temperature Tgi4 from time t7' onwards, wherein time t7' is a later time than time t7 but earlier than time t8. The inflowing gas temperature Tgib in the second DPF 12b becomes equal to or higher than the fourth target inflowing gas temperature Tgi4 from time t8' onwards, wherein time t8' is an earlier time than time t8 but later than time t7'. The outflowing gas temperature Tgoa in the first DPF 12a and the outflowing gas temperature Tgob in the second DPF 12b are lower than the fourth target outflowing gas temperature Tgo4 in the lapse until time t8'. The ECU 50 executes the process from step S14 up to step S8 in Fig. 2, at time t8, which is the latest from among times t7, t7', t8 and t8', and raises the stage of target bed temperature to the fifth stage (N = 5), for the first DPF 12a and the second DPF 12b, after which the ECU 50 sets the target bed temperature to the fifth target bed temperature T5.

Returning to Fig. 2, in step S8 arrived at from step S14, the ECU 50 sets the stage N of the target bed temperature to 5, for the first DPF 12a and the second DPF 12b that satisfy the fourth temperature rise condition, and proceeds to step S9. In PM regeneration at the target bed temperature of a fifth stage, the ECU 50 performs the operation from step S9 to step S11, in the same way as in the above-described second stage to fourth stage.

In step S9, the ECU 50 sets the fifth target bed temperature T5 of the fifth stage for both the first DPF 12a and the second DPF 12b, and proceeds to step S10. As the fifth target bed temperature T5, the ECU 50 sets herein a preferred DPF bed temperature as the last target in PM regeneration, for instance a temperature of about 650°C that is optimal for PM regeneration.

In step S10, the ECU 50 controls the first fuel injection valve 16a and the second fuel injection valve 16b (Fig. 1) in such a manner that the estimated bed temperature Tfa in the first DPF 12a and the estimated bed temperature Tfb of the second DPF 12b are raised up to the fifth target bed temperature T5, to increase the fuel addition amount. The ECU 50 proceeds from step S10 to step S11, but herein, the stage N is 5, which is identical to that of the maximum value Nmax (Nmax = 5). Therefore, the ECU 50 proceeds then from step S11 to step S19 illustrated in Fig. 3.

With reference to Fig. 3, in step S19 the ECU 50 acquires a value of the estimated PM deposition amount da in the first DPF 12a and of the estimated PM deposition amount db in the second DPF 12b, and proceeds to step S20. In step S20, the ECU 50 determines whether the estimated PM deposition amount da in the first DPF 12a is equal to or smaller than a regeneration completion reference amount β. The regeneration completion reference amount β is a target PM deposition amount after removal of PM through PM regeneration, i.e. is a PM deposition amount for determining that PM regeneration is complete. The regeneration completion reference amount β is set beforehand and stored in the ECU 50.

The ECU 50 determines that PM regeneration is complete in the first DPF 12a if the estimated PM deposition amount da is equal to or smaller than the regeneration completion reference amount β (estimated PM deposition amount da ≤ β), and proceeds to step S21. By contrast, the ECU 50 determines that PM regeneration is not complete in the first DPF 12a if the estimated PM deposition amount da is greater than the regeneration completion reference amount β (estimated PM deposition amount da > β), and proceeds to step S23.

In step S21 arrived at from step S20, the ECU 50 determines whether the estimated PM deposition amount db in the second DPF 12b is equal to or smaller than the regeneration completion reference amount β. The ECU 50 determines that PM regeneration is complete in the second DPF 12b if the estimated PM deposition amount db is equal to or smaller than the regeneration completion reference amount β (estimated PM deposition amount db ≤ β), and proceeds to step S22. By contrast, the ECU 50 determines that PM regeneration is not complete in the second DPF 12b if the estimated PM deposition amount db is greater than the regeneration completion reference amount β (estimated PM deposition amount db > β), and returns to step S19 in order to acquire again values of the estimated PM deposition amount in the first DPF 12a and the second DPF 12b.

In step S23 arrived at from step S20, the ECU 50 determines whether the estimated PM deposition amount db in the second DPF 12b is equal to or smaller than the regeneration completion reference amount β. The ECU 50 determines that PM regeneration is complete in the second DPF 12b if the estimated PM deposition amount db is equal to or smaller than the regeneration completion reference amount β, and proceeds to step S24. By contrast, the ECU 50 determines that PM regeneration is not complete in the second DPF 12b if the estimated PM deposition amount db is greater than the regeneration completion reference amount β, and returns to

### step S19.

In step S24, the ECU 50 acquires values of the estimated PM deposition amount da in the first DPF 12a and the estimated PM deposition amount db in the second DPF 12b, and proceeds to step S25. The ECU 50 determines whether the estimated PM deposition amount da in the first DPF 12a, for which completion of PM regeneration had not been determined, is equal to or smaller than the regeneration completion reference amount β. The ECU 50 determines that PM regeneration is complete in the first DPF 12a if the estimated PM deposition amount da is equal to or smaller than the regeneration completion reference amount β, and proceeds to step S22. The ECU 50 determines that PM regeneration is not complete in the first DPF 12a if the estimated PM deposition amount da is greater than the regeneration completion reference amount β, and returns to step S24.

In step S22, the ECU 50 terminates PM regeneration in the first DPF 12a and the second DPF 12b for which it has been determined that PM regeneration is complete. Thereupon, the ECU 50 discontinues fuel addition by the first fuel injection valve 16a and the second fuel injection valve 16b (Fig. 1). The ECU 50 also terminates the routine relating to PM regeneration control in the first DPF 12a and the second DPF 12b.

The ECU 50 periodically executes the above-described routine that comprises steps S1 to S25 repeatedly. That is, the ECU 50 determines periodically whether or not PM regeneration is to be performed in the first DPF 12a and the second DPF 12b, and executes PM regeneration in accordance with the result of the determination.

With reference to Fig. 4, in PM regeneration where the fifth target bed temperature T5 is the target bed temperature, first the estimated PM deposition amount da in the first DPF 12a becomes equal to or smaller than the regeneration completion reference amount β. At this time, the ECU 50 continues PM regeneration, as-is, in the first DPF 12a and the second DPF 12b. Thereafter, at time t9, the ECU 50 terminates PM regeneration in the first DPF 12a and the second DPF 12b when, at time t9, the estimated PM deposition amount db in the second DPF 12b reaches the regeneration completion reference amount β.

As described above, the ECU 50 controls each bed temperature of the first DPF 12a and second DPF 12b during PM regeneration in accordance with the target bed temperature, while raising, stage-wise, the target bed temperature during PM regeneration in the DPFs 12a and 12b. The ECU 50 raises one stage and sets a target bed temperature when parameters relating to the first DPF 12a and parameters relating to the second DPF 12b satisfy in both instances the temperature rise condition for raising the target bed temperature.

The above explanation shows that the exhaust gas purifying device 101 according to Embodiment 1 of the present invention includes the first DPF 12a and the second DPF 12b for trapping PM (particulate matter) contained in exhaust gas, such that fuel is supplied upstream of the first DPF 12a and the second DPF 12b in order to elicit PM regeneration in the first DPF 12a and the second DPF 12b. The ECU 50 of the exhaust gas purifying device 101 functions as target temperature setting means for setting a target bed temperature for the purpose of raising the temperature of the first DPF 12a and the second DPF 12b during PM regeneration; also, the ECU 50 functions as fuel control means for controlling the fuel that is supplied upstream of the first DPF 12a and the second DPF 12b in accordance with the set target bed temperature. Further, the ECU 50 functions as information detection means for detecting values of parameters that is information relating to the first DPF 12a and the second DPF 12b, and functions as comparison means for comparing the detected values of parameters with a temperature rise condition for raising the target bed temperature. The ECU 50 performs re-setting of the target bed temperature by raising the target bed temperature that is set for both the first DPF 12a and the second DPF 12b in which PM regeneration is performed, when it is determined that the values of the parameters in both the first DPF 12a and the second DPF 12b in which PM regeneration is performed satisfy the temperature rise condition.

In the first DPF 12a and the second DPF 12b, accordingly, PM regeneration is performed through control of the bed temperature so as to conform to the target bed temperature that is raised stage-wise. As a result, this allows the prevention of abrupt rises in bed temperature. Further, the stage-wise increases of target bed temperature of the first DPF 12a and the second DPF 12b are performed concurrently when the ECU 50 determines that the parameter values for both the first DPF 12a and the second DPF 12b satisfy the temperature rise condition. As a result, it becomes possible to suppress relative advance of PM regeneration in just one of the first DPF 12a and the second DPF 12b, and it becomes possible to suppress a biased back pressure between exhaust systems in the first cylinder group 1a and the second cylinder group 1b.

Also, raising of the target bed temperature can be discontinued when an anomaly occurs, for instance through degradation or the like, in one of the first DPF 12a and the second DPF 12b in the exhaust gas purifying device 101. This allows prevention of damage caused by ongoing heating of the DPF where the anomaly has occurred. A normal DPF may suffer from similar anomalies where the anomalies are caused by aging degradation. However, discontinuing the rise in target bed temperature allows the advance of thermal degradation in a normal DPF to be prevented

In the exhaust gas purifying device 101, the target bed temperature is set distributedly across a plurality of stages; the temperature rise condition includes a condition for each stage, for raising the target bed temperature of the abovementioned stage to the target bed temperature of the subsequent stage; the ECU 50 performs re-setting of the target bed temperature by raising the target bed temperature that is set for both the first DPF 12a and the second DPF 12b in which PM regeneration is performed, every time that parameter values in both the first DPF 12a and the second DPF 12b in which PM regeneration is performed satisfy one condition from among the conditions in the stages. The bed temperatures of the first DPF 12a and the second DPF 12b during PM regeneration can be thus finely controlled through stage-wise raising of the target bed temperature across the plurality of stages.

Differences in back pressure between the first cylinder group 1a and the second cylinder group 1b give rise to differences in the recirculation rate of exhaust gas, by way of the first EGR passage portion 8a and the second EGR passage portion 8b, so that thermal damage and impairment of durability are greater in the EGR cooler and EGR valve of the EGR passage portion where the exhaust gas recirculation rate is greater. Also, differences in the exhaust gas recirculation rate between the first cylinder group 1a and the second cylinder group 1b give rise to differences between the flow rates of the exhaust gas that flows to the downstream first turbocharger 5a and second turbocharger 5b, and give rise to differences between the revolutions of the first turbocharger 5a and the second turbocharger 5b. This results in a greater likelihood of surging in which intake air is blown back from the first turbocharger 5a or the second turbocharger 5b when the throttle valve 9 is closed. However, setting the same target bed temperature for both the first DPF 12a and the second DPF 12b allows variability in back pressure between the first cylinder group 1a and the second cylinder group 1b to be suppressed, and allows prevention of the occurrence of the above-described problems.

In the exhaust gas purifying device 101, the parameters are selected from among an estimated PM deposition amount in the first DPF 12a and the second DPF 12b, a bed temperature being the temperature of the first DPF 12a and the second DPF 12b, the temperature of exhaust gas flowing into the first DPF 12a and the second DPF 12b, and the temperature of exhaust gas flowing out of the first DPF 12a and the second DPF 12b. Each state of the first DPF 12a and the second DPF 12b during PM regeneration can be accurately grasped by using the above-described parameters. Also, abnormal overheating of the first DPF 12a and the second DPF 12b through PM combustion can be detected in real time by using the above-described parameters.

### Second embodiment

In an exhaust gas purifying device according to Embodiment 2 of the present invention, the PM regeneration control performed in the exhaust gas purifying device 101 of Embodiment 1 is modified when the stage N is 5. In the embodiment below, reference numerals identical to those already depicted in previous figures denote identical or similar constituent elements, and an explanation thereof will be omitted.

The exhaust gas purifying device and the peripheral configuration thereof according to Embodiment 2 of the present invention are identical to those of Embodiment 1, and will not be explained again.

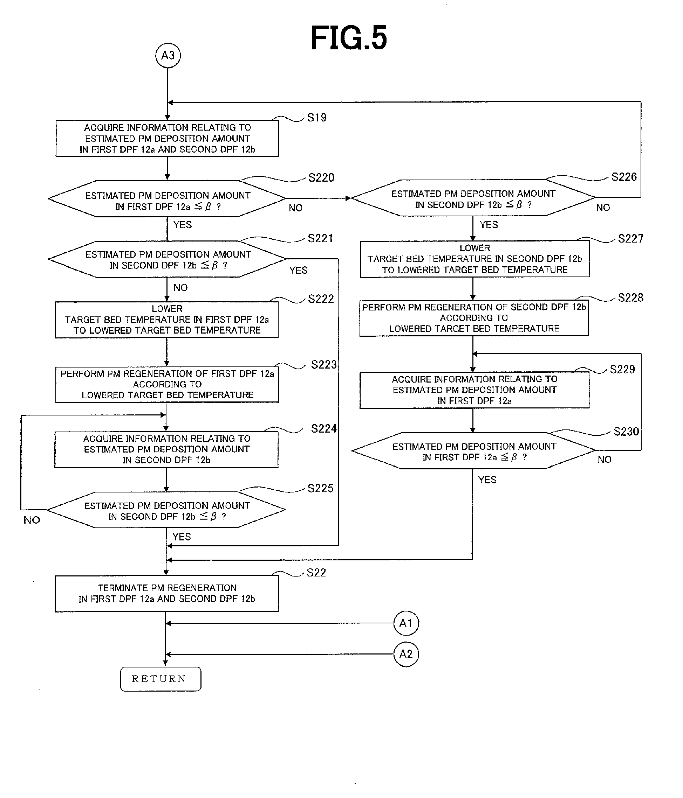

In the exhaust gas purifying device according to Embodiment 2, the ECU 50 performs control identical to that of steps S1 to S18 in the PM regeneration control illustrated in the flowchart of Fig. 2 for the exhaust gas purifying device 101 of Embodiment 1. From step S19 illustrated in Fig. 3, arrived at from step S11, the ECU 50 controls PM regeneration of the first DPF 12a and the second DPF 12b according to the control scheme illustrated in the flowchart of Fig. 5.

With reference to Fig. 5, in step S19 arrived at from step S11, the ECU 50 acquires a value of the estimated PM deposition amount da in the first DPF 12a and a value of the estimated PM deposition amount db in the second DPF 12b, in the same way as in step S19 illustrated in the flowchart of Fig. 3, and the ECU 50 proceeds to step S220.

In step S220, the ECU 50 determines whether the estimated PM deposition amount da in the first DPF 12a is equal to or smaller than a regeneration completion reference amount β. The ECU 50 determines that PM regeneration is complete in the first DPF 12a if the estimated PM deposition amount da is equal to or smaller than the regeneration completion reference amount β, and proceeds to step S221. The ECU 50 determines that PM regeneration is not complete in the first DPF 12a if the estimated PM deposition amount da is greater than the regeneration completion reference amount β, and the ECU 50 proceeds to step S226.

In step S221, the ECU 50 determines whether the estimated PM deposition amount db in the second DPF 12b is equal to or smaller than the regeneration completion reference amount β. The ECU 50 determines that PM regeneration is not complete in the second DPF 12b if the estimated PM deposition amount db is greater than the regeneration completion reference amount β, and proceeds to step S222. If the estimated PM deposition amount db is equal to or smaller than the regeneration completion reference amount β, the ECU 50 determines that PM regeneration is complete in the second DPF 12b, in addition to the first DPF 12a, and proceeds to step S22. In step S22, the ECU 50 terminates PM regeneration in the first DPF 12a and the second DPF 12b.

In step S222, the ECU 50 lowers the fifth target bed temperature T5 set for the first DPF 12a, in which PM regeneration has been determined to be complete, to a lowered target bed temperature TL being a lower temperature, and the ECU 50 proceeds to step S223. In step S223, the ECU 50 reduces the fuel addition amount by shortening the opening period of the first fuel injection valve 16a (Fig. 1), in order to lower the estimated bed temperature Tfa in the first DPF 12a and keep the temperature at around the lowered target bed temperature TL, and proceeds to step S224.

The lowered target bed temperature TL may be a temperature such that the PM deposition amount in the first DPF 12a does not increase when PM regeneration is carried out at the lowered target bed temperature TL. As a result, the fuel addition amount from the first fuel injection valve 16a, as necessary for PM regeneration in the first DPF 12a, may be such so as to allow keeping the estimated bed temperature Tfa of the first DPF 12a at around the lowered target bed temperature TL. The fuel addition amount is accordingly reduced.

In step S224, the ECU 50 acquires the value of estimated PM deposition amount db in the second DPF 12b, and proceeds thereafter to step S225. The ECU 50 determines whether the estimated PM deposition amount db is equal to or smaller than the regeneration completion reference amount β. If the estimated PM deposition amount db is equal to or smaller than the regeneration completion reference amount β, the ECU 50 determines that PM regeneration is complete in the second DPF 12b, in addition to the first DPF 12a, and proceeds to step S22. By contrast, the ECU 50 determines that PM regeneration is not complete in the second DPF 12b if the estimated PM deposition amount db is greater than the regeneration completion reference amount β, and returns to step S224 in order to check again the estimated PM deposition amount db in the second DPF 12b where reduction in the PM deposition amount is in progress.

In step S226 arrived at from step S220, the ECU 50 determines whether the estimated PM deposition amount db in the second DPF 12b is equal to or smaller than the regeneration completion reference amount β. The ECU 50 determines that PM regeneration is complete in the second DPF 12b if the estimated PM deposition amount db is equal to or smaller than the regeneration completion reference amount β, and proceeds to step S227. The ECU 50 determines that PM regeneration is not complete in the second DPF 12b, in addition to the first DPF 12a, if the estimated PM deposition amount db is greater than the regeneration completion reference amount β, and the ECU 50 returns to step S19.

In step S227, the ECU 50 lowers the fifth target bed temperature T5 set for the second DPF 12b, in which PM regeneration has been determined to be complete, to the lowered target bed temperature TL, and the ECU 50 proceeds to step S228. In step S228, the ECU 50 reduces the fuel addition amount by controlling the second fuel injection valve 16b (Fig. 1), in order to lower the estimated bed temperature Tfb in the second DPF 12b and keep the temperature at around the lowered target bed temperature TL, and proceeds to step S229.

In step S229, the ECU 50 acquires the value of estimated PM deposition amount da in the first DPF 12a. Thereafter, in step S230, the ECU 50 determines whether the estimated PM deposition amount da in the first DPF 12a is equal to or smaller than the regeneration completion reference amount β. The ECU 50 determines that PM regeneration is complete in the first DPF 12a, in addition to the second DPF 12b, if the estimated PM deposition amount da is equal to or smaller than the regeneration completion reference amount β, and the ECU 50 proceeds to step S22. By contrast, the ECU 50 determines that PM regeneration is not complete in the first DPF 12a if the estimated PM deposition amount da is greater than the regeneration completion reference amount β, and the ECU 50 returns to step S229.

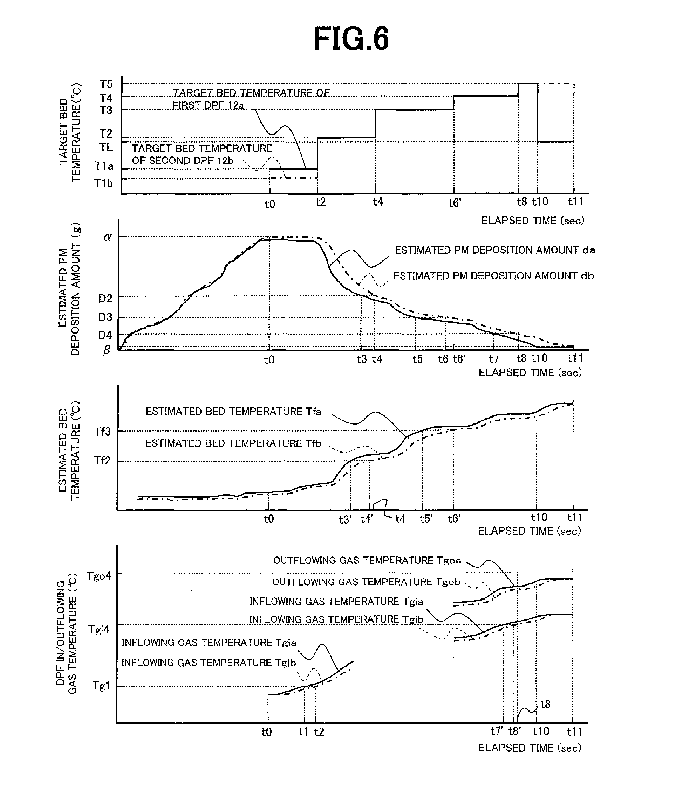

With reference to Fig. 6, the graphs illustrate, in the same way as in Fig. 4, the change over time of target bed temperature, estimated PM deposition amount, estimated bed temperature, and temperature of the gas flowing into and out of the DPFs, relating to the first DPF 12a and the second DPF 12b in the exhaust gas purifying device of Embodiment 2, with regard to partial or complete times from before PM regeneration, during PM regeneration and up to completion of PM regeneration.

In PM regeneration at the fifth target bed temperature T5 in the fifth stage, the estimated PM deposition amount da in the first DPF 12a is the first to reach the regeneration completion reference amount β, at time t10. Herein, the setting of the target bed temperature of the first DPF 12a is modified from the fifth target bed temperature T5 to the lowered target bed temperature TL. As a result of doing so, the fuel addition amount from the first fuel injection valve 16a (Fig. 1) is reduced to an amount corresponding to the lowered target bed temperature TL. Therefore, the estimated PM deposition amount da in the first DPF 12a from time t10 onwards is kept at around the regeneration completion reference amount β but being no greater than the regeneration completion reference amount β. The estimated PM deposition amount db in the second DPF 12b reaches the regeneration completion reference amount β at time t11, which is a later time than time t10. Thereupon, the ECU 50 closes the first fuel injection valve 16a and the second fuel injection valve 16b (Fig. 1), to terminate PM regeneration in the first DPF 12a and the second DPF 12b.

As described above, when the estimated PM deposition amount in the DPFs reaches a predetermined deposition amount (regeneration completion reference amount β), during PM regeneration at the target bed temperature of the final stage Nmax (in the present Embodiment 2, Nmax = 5), the ECU 50 lowers the target bed temperature of those DPFs, and lowers the removal amount of PM per unit time, i.e. lowers the PM regeneration rate, and continues PM regeneration,.

The operation of the exhaust gas purifying device and the peripheral configuration thereof according to Embodiment 2 of the present invention is identical to that in Embodiment 1, and will not be explained again.

The above explanation shows that the exhaust gas purifying device in Embodiment 2 elicits the same effect as the exhaust gas purifying device in Embodiment 1.

The ECU 50 in the exhaust gas purifying device of Embodiment 2 lowers the target bed temperature for the first DPF 12a or the second DPF 12b in which the estimated PM deposition amount has become equal to or smaller than the regeneration completion reference amount β that denotes completion of PM regeneration. Herein, the rate of PM regeneration is lowered through reduction of the fuel addition amount from the first fuel injection valve 16a or the second fuel injection valve 16b, for the first DPF 12a or second DPF 12b in which the estimated PM deposition amount has become equal to or smaller than the regeneration completion reference amount β. In the DPF in which the estimated PM deposition amount has become equal to or smaller than the regeneration completion reference amount β, therefore, PM regeneration is continued in a state of lowered fuel addition amount until completion of PM regeneration in the DPF where the estimated PM deposition amount is greater than the regeneration completion reference amount β. The fuel economy of the vehicle can be enhanced as a result.

In Embodiment 2, the ECU 50 lowers the PM regeneration rate for the first DPF 12a or second DPF 12b in which the estimated PM deposition amount has become equal to or smaller than the regeneration completion reference amount β. However, the embodiment is not limited thereto. The ECU 50 may discontinue, completely or temporarily, PM regeneration for the first DPF 12a or second DPF 12b in which the estimated PM deposition amount has become equal to or smaller than the regeneration completion reference amount β. As a result, the amount of fuel that is added until completion of PM regeneration in the DPF where PM regeneration is being continued is reduced. The fuel economy of the vehicle can be enhanced as a result.

In Embodiments 1 and 2, the fuel addition amount from the first fuel injection valve 16a and the second fuel injection valve 16b may be increased in order to raise the bed temperatures of the first DPF 12a and the second DPF 12b, in accordance with the target bed temperature at each stage during PM regeneration, and, thereafter, the first fuel injection valve 16a and the second fuel injection valve 16b may be closed to terminate all PM regeneration processes, if the bed temperature of the first DPF 12a or the second DPF 12b does not rise after a predetermined lapse of time. Anomalies can occur in the devices involved in PM regeneration, for instance in the fuel injection valves, oxidation catalysts, DPFs, temperature sensors and so forth. It thus becomes possible to prevent further damage to a device suffering from an anomaly as a result of PM regeneration in an anomalous state.

In Embodiments 1 and 2, the first fuel injection valve 16a and the second fuel injection valve 16b are provided in the first exhaust manifold 3a and the second exhaust manifold 3b, respectively, in order to mix fuel into the exhaust gas, but the embodiments are not limited thereto. The first fuel injection valve 16a and the second fuel injection valve 16b may be provided in the first exhaust passage portion 10aa of the first exhaust passage 10a and the first exhaust passage portion 10ba of the second exhaust passage 10b, respectively. Alternatively, the injectors 1ab and 1bb may inject fuel over a plurality of times into the cylinders 1aa and 1ba, respectively, in one combustion stroke in the engine main body 1, so that fuel is mixed into the exhaust gas through post-injection immediately before opening of the exhaust valves in order to discharge exhaust gas from inside the cylinders 1aa and 1ba.

In Embodiments 1 and 2, the estimated PM deposition amount is calculated using a PM generation amount that is estimated and calculated based on the operation state of the vehicle, for instance the operation state of the engine main body 1, engine load, engine revolutions, fuel injection amount and intake air amount, etc., and using a PM oxidation amount that is estimated and calculated on the basis of the intake air amount in the engine main body 1 and the estimated bed temperatures in the first DPF 12a and second DPF 12b. However, the embodiments are not limited thereto. The estimated PM deposition amount may also be calculated on the basis of upstream and downstream pressure differences in the first DPF 12a and the second DPF 12b.

In Embodiments 1 and 2, the control of the bed temperatures of the first DPF 12a and the second DPF 12b in accordance with the target bed temperature is performed through adjustment of the opening period of the first fuel injection valve 16a and the second fuel injection valve 16b, but the embodiments are not limited thereto. Heating devices such as burners, heaters or the like may be provided in the first DPF 12a and the second DPF 12b themselves, or upstream thereof, such that the temperature of the first DPF 12a itself, the temperature of the second DPF 12b itself, and the temperature of the exhaust gas flowing into the first DPF 12a or the temperature of the exhaust gas flowing into the second DPF 12b are adjusted by means of the heating devices.

The combination of parameters used in the temperature rise conditions for target bed temperature in each stage of PM regeneration control are not limited to the combinations in Embodiments 1 and 2. Further, the parameters used in the temperature rise condition are also not limited to the parameters in Embodiments 1 and 2. Herein there may be used the upstream and downstream pressure in the oxidation catalysts 11a and 11b, the upstream and downstream pressure in the DPFs 12a and 12b, etc.

The exhaust gas purifying devices in Embodiments 1 and 2 perform control of PM regeneration between two DPFs, namely the first DPF 12a and the second DPF 12b, but the embodiments are not limited thereto, and PM regeneration control may be performed among three or more DPFs.
In an exhaust gas purifying device 101 that includes DPFs 12a and 12b to perform PM regeneration simultaneously through supply of fuel upstream of the DPFs 12a and 12b, an ECU 50 sets a target bed temperature for the purpose of raising the temperature of the DPFs 12a and 12b during PM regeneration, and controls the fuel supplied upstream of the DPFs 12a and 12b in accordance with the set target bed temperature. The ECU 50 detects parameter values relating to the DPFs 12a and 12b, and compares the detected parameter values with a temperature rise condition for raising the target bed temperature. Upon determination that the parameter values in both the DPFs 12a and 12b satisfy the temperature rise condition, the ECU 50 resets a new target bed temperature by raising the target bed temperature set for the DPFs 12a and 12b.

## Claims

1. An exhaust gas purifying device (101) that is provided with a plurality of particulate matter trapping means (12a, 12b) for trapping particulate matter contained in exhaust gas, and that supplies fuel upstream of the particulate matter trapping means (12a, 12b) in order to regenerate the particulate matter trapping means (12a, 12b), the exhaust gas purifying device (101) comprising:
target temperature setting means for setting a target temperature for the purpose of raising the temperature of the particulate matter trapping means (12a, 12b) during regeneration;
fuel control means for controlling the fuel that is supplied upstream of the particulate matter trapping means (12a, 12b) in accordance with the target temperature set by the target temperature setting means; and
information detection means for detecting information relating to the particulate matter trapping means (12a, 12b), **characterized in that** the exhaust gas purifying device (101) further comprises comparison means for comparing the information detected by the information detection means with a temperature rise condition for raising the target temperature, and
**in that** the target temperature setting means performs re-setting of the target temperature by raising the target temperature that is set for all the particulate matter trapping means (12a, 12b) to be regenerated, when the comparison means determines that the information in all the particulate matter trapping means (12a, 12b) to be regenerated satisfies the temperature rise condition.

2. The exhaust gas purifying device according to claim 1, **characterized in that**
the target temperature is set distributedly across a plurality of stages,
the temperature rise condition includes a condition, for each stage, for raising the target temperature of the stage to the target temperature of the subsequent stage, and
the target temperature setting means performs re-setting of the target temperature by raising the target temperature that is set for all the particulate matter trapping means (12a, 12b) to be regenerated, every time that the information in all the particulate matter trapping means (12a, 12b) to be regenerated satisfies one condition from among the conditions in the stages.

3. The exhaust gas purifying device according to claim 1 or 2, **characterized in that**
the target temperature setting means sets the same target temperature for all the particulate matter trapping means (12a, 12b) to be regenerated.

4. The exhaust gas purifying device according to any one of claims 1 to 3, **characterized in that**
the target temperature setting means lowers the target temperature for the particulate matter trapping means (12a, 12b) in which a deposition amount of particulate matter becomes equal to or smaller than a regeneration completion reference amount that denotes completion of regeneration.

5. The exhaust gas purifying device according to any one of claims 1 to 4, **characterized in that**
the information is selected from among deposition amount of particulate matter in the particulate matter trapping means (12a, 12b), temperature of the particulate matter trapping means (12a, 12b), temperature of exhaust gas flowing into the particulate matter trapping means (12a, 12b) and temperature of exhaust gas flowing out of the particulate matter trapping means (12a, 12b).

6. A method for controlling an exhaust gas purifying device in which a plurality of particulate matter trapping means (12a, 12b) for trapping particulate matter contained in exhaust gas are regenerated simultaneously in order to remove trapped particulate matter from the particulate matter trapping means (12a, 12b), the method comprising:
a target temperature setting step of setting a target temperature for the purpose of raising the temperature of the particulate matter trapping means (12a, 12b) during regeneration;
a regeneration control step of controlling regeneration in the particulate matter trapping means (12a, 12b) so as to raise the temperature of the particulate matter trapping means (12a, 12b) to the target temperature set in the target temperature setting step; and
an information detection step of detecting information relating to the particulate matter trapping means (12a, 12b), **characterized in that** the method for controlling the exhaust gas purifying device further comprises a comparison step of comparing the information detected in the information detection step with a temperature rise condition for raising the target temperature, and
**in that**, in the target temperature setting step, re-setting of the target temperature is performed by raising the target temperature that is set for all the particulate matter trapping means (12a, 12b) to be regenerated when it is determined, in the comparison step, that the information in all the particulate matter trapping means (12a, 12b) to be regenerated satisfies the temperature rise condition.

7. The method according to claim 6, **characterized in that**
the target temperature is set distributedly across a plurality of stages,
the temperature rise condition includes a condition, for each stage, for raising the target temperature of the stage to the target temperature of the subsequent stage, and
in the target temperature setting step, re-setting of the target temperature is performed by raising the target temperature that is set for all the particulate matter trapping means (12a, 12b) to be regenerated, every time that the information in all the particulate matter trapping means (12a, 12b) to be regenerated satisfies one condition from among the conditions in the stages.

8. The method according to claim 6 or 7, **characterized in that**,
in the target temperature setting step, the same target temperature is set for all the particulate matter trapping means (12a, 12b) to be regenerated.

9. The method according to any one of claims 6 to 8, **characterized by** further comprising a target temperature lowering step of lowering the target temperature for the particulate matter trapping means (12a, 12b) in which a deposition amount of particulate matter during regeneration becomes equal to or smaller than a regeneration completion reference amount that denotes completion of regeneration.

10. The method according to any one of claims 6 to 9, **characterized in that**
the information is selected from among deposition amount of particulate matter in the particulate matter trapping means (12a, 12b), temperature of the particulate matter trapping means (12a, 12b), temperature of exhaust gas flowing into the particulate matter trapping means (12a, 12b) and temperature of exhaust gas flowing out of the particulate matter trapping means (12a, 12b).
